# EUROPEAN PATENT APPLICATION

(11) **EP 2 733 771 A1**
(43) Date of publication of application: **21.05.2014**
(21) Application number: 12815003.4
(22) Date of filing: 12.07.2012
(51) Int. Cl.: H01M 2/12

(54) **SECONDARY BATTERY**

(30) Priority: 15.07.2011 JP 2011156562
(71) Applicant: Kabushiki Kaisha Toshiba, Minato-ku Tokyo 105-8001 (JP)
(72) Inventor: URUNO, Masamitsu, Tokyo (JP); YANAGISAWA, Hirotaka, Tokyo (JP); ISOZAKI, Yoshiyuki, Tokyo (JP)
(74) Representative: HOFFMANN EITLE
(86) International application number: PCT/JP2012/067799
(87) International publication number: WO 2013/011915

(57) **Abstract**

A secondary battery (1) includes a package (2) where an electrolytic solution is stored, an electrode assembly (3) provided inside the package (2) and configured to function as a power generation element, a pressure release valve (2b1) provided in the package (2) and configured to discharge a gas generated inside the package (2), and an insulator (8) provided between the pressure release valve (2b1) and the electrode assembly (3) and covering the pressure release valve (2b1) at a position away from the pressure release valve (2b1). The insulator (8) includes multiple opening portions (8c) serving as flow paths of the gas.

## Description

### Technical Field

Embodiments of the present invention relate to a secondary battery.

### Background Art

As large-scale and large-capacity electric power sources for use in an electric vehicle (EV), a hybrid electric vehicle (HEV), an electric motorcycle, a forklift truck, and the like, nonaqueous electrolyte secondary batteries (for example, lithium-ion secondary batteries) having a high energy density have been drawing attention, and are under development for increasing the scale and capacity with taken a longer life and safety into account. As a large-capacity electric power source, a battery pack has been developed in which a large number of batteries connected in series or parallel are packaged to obtain a high driving electric power.

A nonaqueous electrolyte secondary battery uses, for example, a flat type of electrode group (electrode assembly) in which a band-shaped cathode and a band-shaped anode in each of which electrode active material layers area formed on both surfaces of a metal foil are rolled in a flat shape with band-shaped separators interposed in between. In order to extract an electric energy generated by the flat type of electrode group to the outside, there is a known electric energy extraction method in which the flat type of electrode group uses metal foils (tab) having no electrode active material layers formed thereon, and being provided to the cathode and the anode and connected to leads. Moreover, to enhance the electricity collection efficiency, the tab of each of the cathode and the anode is multi-layered and joined into a bundle, and then is welded to a lead or the like. For the purpose of using such a battery as a large-capacity power source suitable for EV, an amount of electrode active material stored inside the package (outer package can) of the battery needs to be increased by increasing the number of layers in a roll of the band-shaped electrodes in each of which the electrode active material layers are formed on both surfaces of the metal foil.

In general, the nonaqueous electrolyte secondary battery is required to secure the safety in ordinary use as a matter of course, and is also strongly required to secure the safety under a condition where the internal pressure of the battery becomes extraordinary high due to an overcharge, an external short circuit, or an inappropriate handling such as a case where the battery is left in a high-temperature atmosphere for a long time. As a measure for the safety, the nonaqueous electrolyte secondary battery includes a pressure release valve which operates depending on the internal pressure of the battery. When the internal pressure becomes a predetermined value or higher, the pressure release valve operates and releases a gas filled inside the package of the battery to the outside, thereby preventing a rupture of the battery.

### Citation List

### Patent Literature

PLT1: Patent Application Laid-Open Publication 2001-143759

### Summary of Invention

In the foregoing nonaqueous electrolyte secondary battery, however, when an anomaly such as an overcharge or vehicle crash occurs, a gas generated by decomposition of the electrolyte or the like tends to accumulate inside the package of the battery, and may cause a trouble such as swelling or rupture of the package because the filled gas is not speedily discharged from the pressure release valve to the outside. In particular, when an anomaly such as an overcharge or vehicle crash occurs, a substance inside the package (for example, a fragment of an aluminum foil or resin fractured by an impact of gas ejection) may be discharged from the pressure release valve. If the pressure release valve clogs with the substance, the pressure release valve cannot discharge the gas anymore, which accelerates occurrence of a trouble such as swelling or rapture of the package.

A problem to be solved by the present invention is to provide a secondary battery capable of improving the safety and reliability of the secondary battery by performing a stable discharge of a gas from the inside of the package.

According to an embodiment, a secondary battery includes : a package in which an electrolytic solution is stored; an electrode assembly provided inside the package and configured to function as a power generation element; a pressure release valve provided in the package and configured to discharge a gas generated inside the package; and an insulator provided between the pressure release valve and the electrode assembly and covering the pressure release valve at a position away from the pressure release valve, wherein the insulator includes a plurality of opening portions serving as flow paths of the gas.

### Brief Description of Drawings

Fig. 1 is a perspective exploded view of a schematic structure of a secondary battery according to an embodiment.
Fig. 2 is a perspective external-appearance view presenting an enlarged view of a part of the secondary battery illustrated in Fig. 1.
Fig. 3 is a cross sectional view presenting an enlarged view of a part of the secondary battery illustrated in Fig. 1.
Fig. 4 is a perspective external-appearance view presenting a first modified example of an insulator included in the secondary battery illustrated in Fig. 1.
Fig. 5 is a perspective external-appearance view presenting a second modified example of an insulator included in the secondary battery illustrated in Fig. 1.

### Description of Embodiments

An embodiment is described with reference to the drawings.

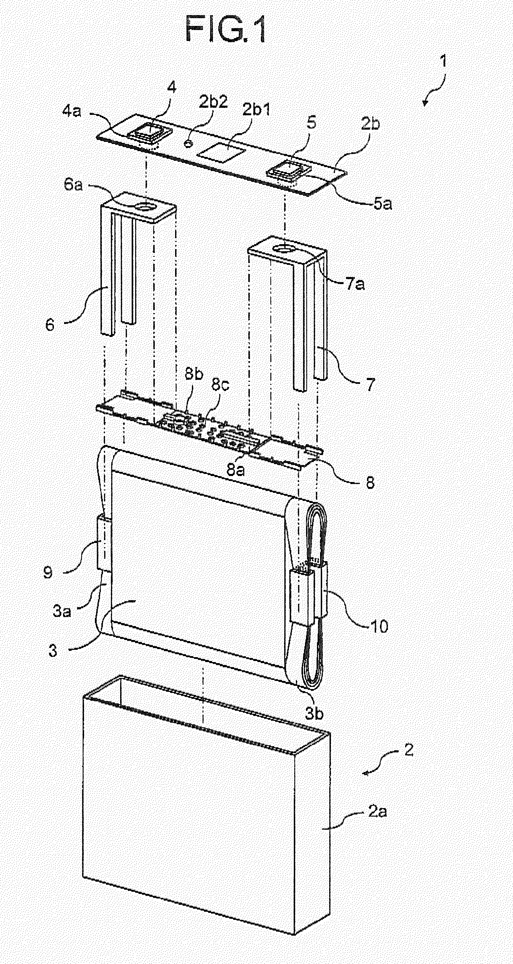

As illustrated in Fig. 1, a secondary battery 1 according to the present embodiment includes: a package 2 including a package main body 2a and a lid 2b; an electrode assembly 3 provided inside the package 2; a pair of a cathode terminal 4 and an anode terminal 5 provided in the lid 2b; a cathode lead 6 electrically connecting a cathode of the electrode assembly 3 and the cathode terminal 4 to each other; an anode lead 7 electrically connecting an anode of the electrode assembly 3 and the anode terminal 5 to each other; and an insulator 8 located between the lid 2b and the electrode assembly 3. A nonaqueous electrolyte secondary battery such for example as a lithium-ion battery can be cited as the secondary battery 1.

The package 2 is an outer package (casing) having a flat cubic shape, and is made of a metal material such as aluminum, an aluminum alloy or a stainless steel, for example. The package 2 includes a one-end-opened package main body 2a in which an upper end (in Fig. 1) is opened; and a lid 2b having a rectangular plate shape and covering the opening of the package main body 2a. The package 2 is sealed in an air-tight and liquid-tight manner with the lid 2b welded to the package main body 2a. An inner surface of the package main body 2a is provided with an insulating layer (for example, an insulating sheet or the like) for insulating the package main body 2a from the cathode lead 6 and the anode lead 7.

The lid 2b is provided with a pressure release valve 2b1 having, for example, a rectangular shape and located at a center portion of the lid 2b. The pressure release valve 2b1 has a groove formed therein such that the pressure release valve 2b1 turns into an open state upon receipt of a pressure of a predetermined value or higher. Thus, when an internal pressure of the package 2 rises to a predetermined value or higher due to a gas generated inside the package 2 by an anomaly or the like of the secondary battery 1, the pressure release valve 2b1 turns into the open state to discharge the gas inside the package 2, and thereby decreases the internal pressure of the package 2 to prevent the secondary battery 1 from having a trouble such as swelling or rupture. Here, the position of the pressure release valve 2b1 is not limited to the center of the lid 2b, but may be any position other than the center, and the depth and shape of the groove and the area of the pressure release valve 2b1 can be changed appropriately depending on a pressure to be released.

Moreover, the lid 2b is provided with a liquid inlet 2b2 for pouring an electrolytic solution into the package 2. The liquid inlet 2b2 is a through hole, and is formed, for example, in a circular shape. Note that, after the assembling of the secondary battery 1, a predetermine amount of electrolytic solution (for example, an amount of electrolytic solution in which the electrode assembly 3 inside the package 2 can be sufficiently immersed) is poured into the package 2 from the liquid inlet 2b2. Thereafter, the liquid inlet 2b2 is sealed by welding or the like. Here, the position, shape and size of the liquid inlet 2b2 can be changed appropriately as needed.

The electrode assembly 3 is formed such that a cathode collector (cathode) whose surfaces are coated with a cathode active material and an anode collector (anode) whose surfaces are coated with an anode active material are rolled with separators interposed in between and is formed into a flat shape. The electrode assembly 3 is a group of electrodes functioning as a power generation element. One of two end portions of the electrode assembly 3 in a roll axial direction functions as a cathode collection tab 3a and the other end portion thereof functions as an anode collection tab 3b. Here, metal foils, for example, may be used as the cathode collector and the anode collector.

The cathode terminal 4 is provided at one end portion of the lid 2b in a longitudinal direction, and the anode terminal 5 is provide at the opposite end portion thereof. The cathode terminal 4 and the anode terminal 5 are arranged across the pressure release valve 2b1 and the liquid inlet 2b2 in the roll axial direction of the electrode assembly 3 and are formed of conductive materials such as metals. The cathode terminal 4 extends through and beyond the lid 2b and is connected to the cathode lead 6. Similarly, the anode terminal 5 extends through and beyond the lid 2b and is connected to the anode lead 7.

A cathode seal member 4a, which is an insulator called a gasket, for example, and made of a synthetic resin or glass, is provided between the cathode terminal 4 and the lid 2b. Similarly, an anode seal member 5a, which is an insulator called a gasket, for example, and made of a synthetic resin or glass, is provided between the anode terminal 5 and the lid 2b. The cathode seal member 4a and the anode seal member 5a seal gaps of the cathode terminal 4 and the anode terminal 5 from the package 2 in an air-tight and liquid-tight manner, and electrically isolate the cathode terminal 4 and the anode terminal 5 from the package 2.

The cathode lead 6 is a lead portion formed of a conductive material such as a metal, and electrically connecting the cathode collection tab 3a of the electrode assembly 3 and the cathode terminal 4 to each other through a cathode backup lead 9. The cathode backup lead 9 is a lead portion formed of a conductive material such as a metal, and bundling the cathode collection tab 3a of the electrode assembly 3. The cathode lead 6 is formed in a shape extending from a ceiling surface of the package 2 (a back surface of the lid 2b) along side surfaces thereof (side surfaces of the package main body 2a) and holding the cathode backup lead 9 and the cathode collection tab 3a from two sides. End portions of the cathode lead 6 on an electrode assembly 3 side, that is, end portions of paired legs of the cathode lead 6 are joined to the cathode backup lead 9 by ultrasonic welding. On the other hand, a cathode terminal hole 6a is formed in an end portion of the cathode lead 6 on a lid 2b side, and the cathode terminal 4 is inserted into the cathode terminal hole 6a and is joined to the cathode lead 6.

The anode lead 7 is a lead portion formed of a conductive material such as a metal, and electrically connecting the anode collection tab 3b of the electrode assembly 3 and the anode terminal 5 to each other through an anode backup lead 10. The anode backup lead 10 is a lead portion formed of a conductive material such as a metal, and bundling the anode collection tab 3a of the electrode assembly 3. The anode lead 7 is formed in a shape extending from the ceiling surface of the package 2 (the back surface of the lid 2b) along side surfaces thereof (side surfaces of the package main body 2a) and holding the anode backup lead 10 and the anode collection tab 3b from two sides. End portions of the anode lead 7 on the electrode assembly 3 side, that is, end portions of paired legs of the anode lead 7 are joined to the anode backup lead 10 by ultrasonic welding. On the other hand, an anode terminal hole 7a is formed in an end portion of the anode lead 7 on the lid 2b side, and the cathode terminal 5 is inserted into the anode terminal hole 7a and is joined to the anode lead 7.

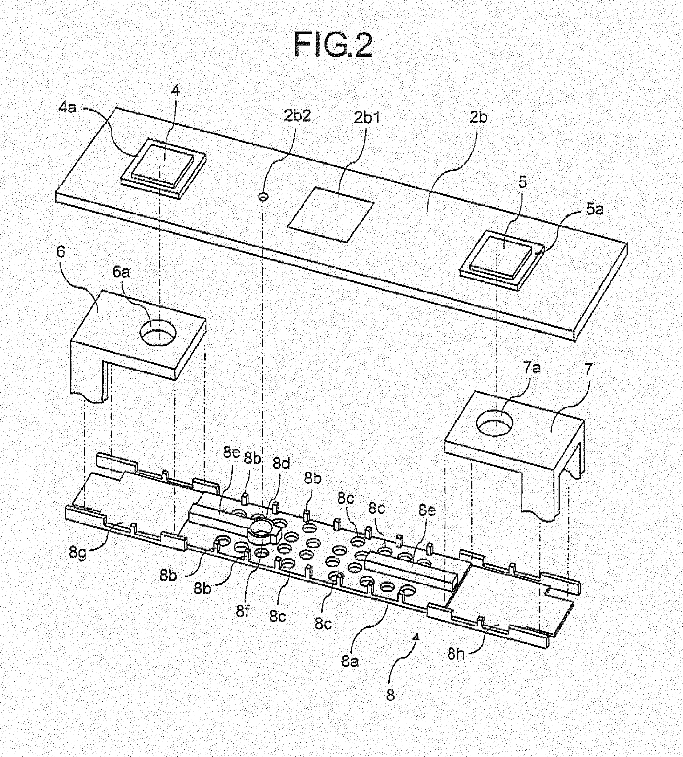

As illustrated in Fig. 2, the insulator 8 includes a plate-like main body 8a, multiple spacing portions 8b for spacing the main body 8a and the lid 2b apart, multiple opening portions 8c serving as flow paths of a gas generated inside the package 2, a liquid-inlet opening portion 8d, plural ribs 8e and a boss 8f for reinforcement, a housing chamber 8g for the cathode lead 6, and a housing chamber 8h for the anode lead 7.

The main body 8a is provided between the lid 2b and the electrode assembly 3 in such a way as to cover the pressure release valve 2b1 at a position away from the pressure release valve 2b1 (see Fig. 1), and thereby prevents the pressure release valve 2b1 and the electrode assembly 3 from coming into direct contact with each other. The main body 8a is made of a resin material such as a phenol resin, for example, and is capable of keeping its shape even when the temperature inside the package 2 reaches a high temperature. Here, the main body 8a and the other portions 8b to 8h are integrally formed of the same material, but their material is not limited to this. They may be formed of different materials or formed as separate units.

The spacing portions 8b are members spacing the lid 2b and the main body 8a apart from each other to form and maintain a gap serving as a gas flow path through which a gas generated inside the package 2 is discharged to the outside of the package 2. These spacing portions 8b are each formed in a square pole shape, and are arranged upright on a surface of the main body 8a on a lid 2b side at equal intervals. The spaces between the spacing portions 8b function as opening portions serving as flow paths of a gas flowing from the gap between the main body 8a and the package 2. Here, each spacing portion 8b is formed in the square pole shape, which is not the only shape, but may be formed in a cylindrical shape, for example. Thus, the shape of the spacing portion 8b is not particularly limited. In addition, the spacing portions 8c are arranged at predetermined intervals being, but not limited to, equal intervals, but may be arranged at random intervals, for example.

The opening portions 8c are through holes formed in the main body 8a, and serve as the gas flow paths through which the gas generated inside the package 2 is discharged to the outside of the package 2. The shape and size of each opening portion 8c is set such that the opening portion 8c can function well as the gas flow path, and that the insulator 8 can prevent a substance inside the package 2 (for example, a fragment of an aluminum foil or resin fractured by an impact of gas ejection) from being ejected therethrough during pressure release. For example, the opening portion 8c preferably has, but not limited to, a circular shape and a size in a diameter of 4 mm or smaller. The shape may be rectangular, and the shape and size are not particularly limited. In addition, the total opening area of the opening portions 8c is preferably within a range of 45% to 65%, both inclusive, of the opening area of the pressure release valve 2b1. This is because the gas does not flow well if the total opening area of the opening portions 8c is smaller than 45% of the opening area of the pressure release valve 2b1, and the prevention of ejection of the substance inside the package 2 is difficult if the total opening area is larger than 65% thereof.

The liquid-inlet opening portion 8d is a through hole formed in the main body 2a, and is provided at a location opposed to the liquid inlet 2b2 of the lid 2b. With this arrangement, the electrolytic solution poured from the liquid inlet 2b2 is supplied into the package 2 through the opening portion 8d without staying on the surface of the main body 8a on the lid 2b side. In this regard, the liquid-inlet opening portion 8d does not have to be provided if the staying of the electrolytic solution is not a problem. In this case, the opening portions 8c function as liquid-inlet opening portions.

The ribs 8e and the boss 8f serve as a reinforcement portion provided on the surface of the main body 8a on the lid 2b side, and reinforcing the insulator 8. The reinforcement portion enables the insulator 8 to keep its shape even when the insulator 8 receives a pressure from the electrode assembly 3 side (for example, a pressure applied by a gas generated inside the package 2 or a pressure applied by the electrolytic solution when the pressure release valve 2b1 is opened). The ribs 8e and the boss 8f are formed of the same material as the main body 8a. The shapes, numbers and locations of the ribs 8e and the bosses 8f can be changed as needed. In the present embodiment, one of the ribs 8e and the boss 8f are integrated with each other. However, the integration is not the only way, and they may be separated from each other. In addition, the liquid-inlet opening portion 8d is provided in the boss 8f in the present embodiment, but this is not the only way. The location of the boss 8f may be changed.

The housing chamber 8g is a space for housing a part of the cathode lead 6. This housing chamber 8g has a pair of notches through which the paired legs of the cathode lead 6 pass. Similarly, the housing chamber 8h is a space for housing a part of the anode lead 7. This housing chamber 8h also has a pair of notches through which the paired legs of the anode lead 7 pass.

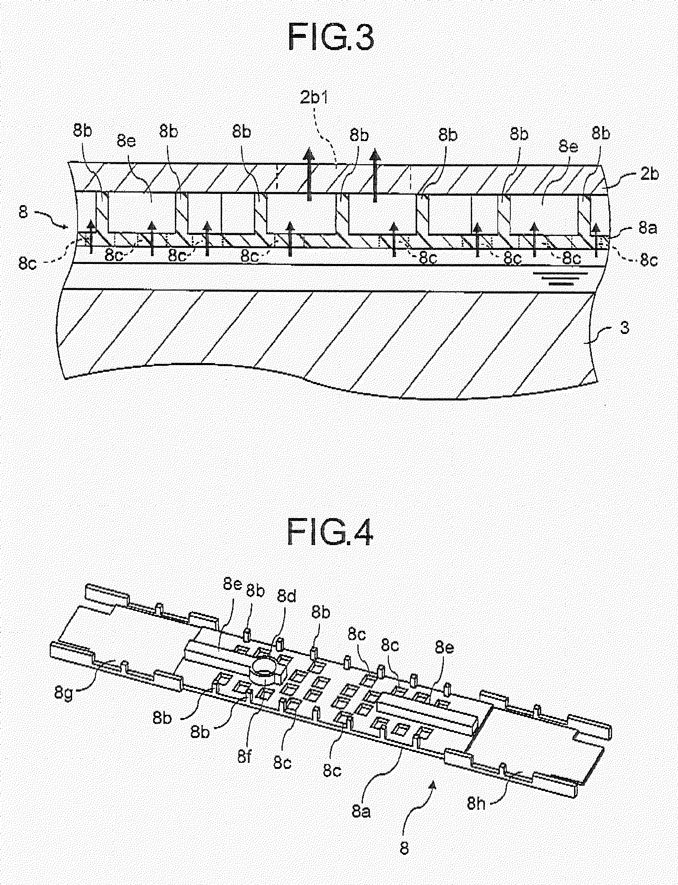

In the secondary battery 1 having the foregoing structure, a gas is generated inside the package 2 due to decomposition of the electrolyte or the like in some cases when an anomaly such for example as an overcharge or vehicle crash occurs. When the internal pressure of the package 2 rises to a predetermined value or higher due to accumulation of the gas inside the package 2, the pressure release valve 2b1 turns to the open state. In response to this, as illustrated in Fig. 3, the gas inside the package 2 flows into the space between the main body 8a of the insulator 8 and the lid 2b while passing through the opening portions 8c of the insulator 8, flows through the space, and then is discharged from the pressure release valve 2b1. In this event, due to a pressure difference between the inside and the outside of the package 2 with the pressure release valve 2b1 opened, a substance inside the package 2 (for example, a fragment of an aluminum foil or resin fractured by an impact of gas ejection) moves toward the pressure release valve 2b1, but is prevented from reaching the pressure release valve 2b1 because the movement is blocked by the insulator 8. To put it differently, the pressure release valve 2b1 can be prevented from clogging with a substance inside the package 2, although such clogging would occur if the substance were ejected from the package 2 due to the pressure difference between the inside and the outside of the package 2 with the pressure release valve 2b1 opened.

As has been described above, according to the foregoing embodiment, the insulator 8 is located away from the pressure release valve 2b1 between the pressure release valve 2b1 and the electrode assembly 3, and includes the multiple opening portions 8c serving as the flow paths of the gas generated inside the package 2. Thus, it is possible to keep a substance inside the package 2 (for example, a fragment of an aluminum foil or resin fractured by an impact of gas ejection) from moving to the pressure release valve 2b1 by using the insulator 8, while securing the gas flow paths by using the opening portions 8c. For instance, when an anomaly such as an overcharge or vehicle crash occurs, a substance inside the package 2 is kept from ejected from the pressure release valve 2b1, and thereby the clogging of the pressure release valve 2b1 with the substance is avoided. Thus, the gas generated inside the package 2 is speedily released from the pressure release valve 2b1 to the outside of the package 2 without accumulating inside the package 2, which makes it possible to prevent the package 2 from having a trouble such as swelling or rapture. Such a stable discharge of a gas from the inside of the package 2 leads to improvements in the safety and reliability of the secondary battery 1.

In addition, the insulator 8 includes the multiple spacing portions 8b for keeping the pressure release valve 2b1 and the insulator 8 spaced apart. For this reason, when the insulator 8 is pulled toward the pressure release valve 2b1 due to the pressure difference between the inside and the outside of the package 2 with the pressure release valve 2b1 opened, for example, the insulator 8 and the pressure release valve 2b1 can be kept spaced apart, and the gap to serve as a gas flow path can be surely secured. This enables the gas generated inside the package 2 to be speedily released from the pressure release valve 2b1 to the outside of the package 2, and thereby surely achieves a stable discharge of the gas from the inside of the package 2.

Since the spacing portions 8b are provide at predetermined intervals on peripheral edges of the insulator 8, the spacing portions 8b are capable of keeping the pressure release valve 2b1 and the insulator 8 spaced apart without blocking the flow of the gas flowing from the opening portions 8c toward the pressure release valve 2b1. In this way, the gas generated inside the package 2 is speedily released from the pressure release valve 2b1 to the outside of the package 2, and thereby the stable discharge of the gas from the inside of the package 2 can be achieved more surely.

In addition, the setting of the total opening area of the opening portions 8c within a range of 45% to 65%, both inclusive, of the opening area of the pressure release valve 2b1 allows the gas to flow well and the insulator 8 to surely prevent ejection of a substance inside the package 2 (for example, a fragment of an aluminum foil or resin fractured by an impact of gas ejection).

Further, the insulator 8 includes, as a reinforcing portion for reinforcing the insulator, the ribs 8e or the boss 8f, and thereby is capable of keeping its shape even when the insulator 8 is pulled toward the pressure release valve 2b1 due to the pressure difference between the inside and the outside of the package 2 with the pressure release valve 2b1 opened, for example. Thus, the gap to serve as the gas flow path can be surely secured. In this way, the gas generated inside the package 2 is speedily released from the pressure release valve 2b1 to the outside of the package 2, and thereby the stable discharge of the gas from the inside of the package 2 can be achieved more surely.

Furthermore, the insulator 8 is located away from the electrode assembly 3, and a space between the insulator 8 and the electrode assembly 3 functions as a gas flow path connecting with the opening portions 8c. Thus, the gas generated inside the package 2 is speedily released from the pressure release valve 2b1 to the outside of the package 2, and thereby the stable discharge of the gas from the inside of the package 2 can be achieved more surely.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

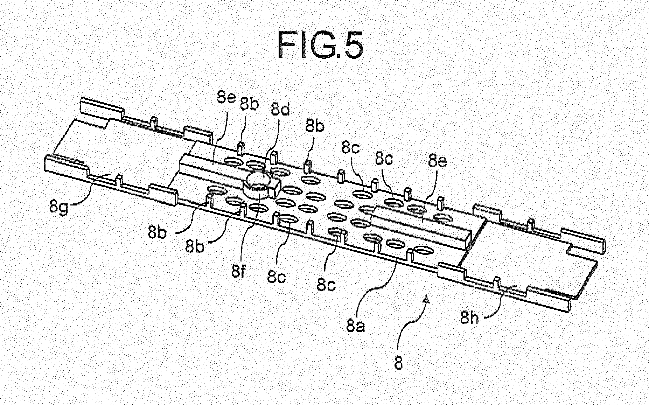

In the foregoing embodiment, the opening portion 8c has a circular shape, for example. However, the shape is not limited to this. The shape may be any, for example, may be square as illustrated in Fig. 4, or may be oval as illustrated in Fig. 5.

## Claims

1. A secondary battery comprising:
a package in which an electrolytic solution is stored;
an electrode assembly provided inside the package and configured to function as a power generation element;
a pressure release valve provided in the package and configured to discharge a gas generated inside the package; and
an insulator provided between the pressure release valve and the electrode assembly and covering the pressure release valve at a position away from the pressure release valve, wherein
the insulator includes a plurality of opening portions serving as flow paths of the gas.

2. The secondary battery according to claim 1, wherein
the insulator includes a plurality of spacing portions keeping the pressure release valve and the insulator spaced apart.

3. The secondary battery according to claim 2, wherein
the plurality of spacing portions are arranged on a peripheral edge of the insulator at a predetermined interval.

4. The secondary battery according to claim 1, wherein
a total opening area of the plurality of opening portions is within a range of 45% to 65%, both inclusive, of an opening area of the pressure release valve.

5. The secondary battery according to claim 1, wherein
the insulator includes a reinforcing portion designed to reinforce the insulator.

6. The secondary battery according to claim 1, wherein
the insulator is located away from the electrode assembly.
